# EUROPÄISCHE PATENTSCHRIFT

(11) **EP 0 557 704 B1**
(45) Veröffentlichungstag und Bekanntmachung des Hinweises auf die Patenterteilung: **02.10.1996**
(21) Anmeldenummer: 93100628.2
(22) Anmeldetag: 16.01.1993
(51) Int. Cl.: H02G 3/06, F16L 33/00

(54) **Anschlusselement**
Joining element
Elément de raccord

(30) Priorität: 27.02.1992 DE 4206016
(43) Veröffentlichungstag der Anmeldung: 01.09.1993
(73) Patentinhaber: Daimler-Benz Aerospace Airbus Gesellschaft mit beschränkter Haftung, 21129 Hamburg (DE)
(72) Erfinder: Kirma, Safa, W-2000 Wedel/Holstein (DE)
(74) Vertreter: Hansmann, Dierk, Dipl.-Ing.

(56) Entgegenhaltungen:
- EP-A- 0 396 927
- CH-A- 526 215
- US-A- 3 711 633
- US-A- 4 829 145

## Beschreibung

Die Erfindung betrifft ein Anschlußelement, das ein Gehäuse zur Halterung eines mindestens einen elektrischen Leiter umgebenden Schutzschlauches aufweist und bei dem das Gehäuse geteilt sowie aus zwei relativ zueinander positionierbaren Gehäuseschalen ausgebildet ist, die einen zur Aufnahme des Schutzschlauches vorgesehenen Innenraum umschließen und im Bereich ihrer Innenbegrenzungen mindestens bereichsweise mit einer an eine Außenkontur des Schutzschlauches angepaßten Innenkontur versehen sind.

Derartige Vorrichtungen werden insbesondere bei Anwendungen im Bereich der Luft- und Raumfahrt dazu verwendet, um innerhalb des Schutzschlauches geführte elektrische Leiter ausreichend sicher im Bereich von Kontaktstellen zu fixieren. Durch die Fixierung erfolgt dabei eine ortsfeste Anordnung der die elektrischen Leiter führenden Schutzschläuche. Die Schutzschläuche sorgen darüber hinaus für eine ausreichende Sicherung der elektrischen Leitungen gegen sie beeinträchtigende Einflüsse.

Die Schutzschläuche sind zur Gewährleistung einer ausreichenden Stabilität üblicherweise als Wellschläuche ausgebildet. Es sind sowohl Ausführungsformen als Ringwellschläuche, bei denen aufeinanderfolgende Ringsegmente vorgesehen sind, als auch eine Ausbildung als Wendelschläuche, bei denen im Bereich von äußeren Begrenzungen eine im wesentlichen spiralförmige Struktur vorgesehen ist, bekannt. Zur Halterung der Schläuche ist es erforderlich, die Schläuche mit einer Halterung zu umschließen, die exakt der Außengeometrie der Schläuche angepaßt ist. In derartige Halterungen werden die Schläuche bei einer spiralförmigen Ausbildung hineingeschraubt, was zu Verdrillungen führen kann. Bei Schraubverbindungen im Bereich von zwei Enden der Schläuche ist es darüber hinaus möglich, daß bei einem Einschrauben des einen Endes durch eine Übertragung der Drehbewegung ein Herausschrauben im Bereich des anderen Endes auftritt.

Ein weiteres bekanntes Verfahren zur Verbindung eines Schutzschlauches mit einem Anschlußelement erfolgt derart, daß zunächst der Schutzschlauch im Bereich eines vorderen Endes erwärmt und gegen einen stumpfen Gegenstand gepreßt wird. Anschließend wird der so aufgebördelte Bereich des Schlauches zwischen eine Muffe und einen Ring eingeklemmt und mit Hilfe einer Überwurfmutter festgezogen.

Darüber hinaus ist es auch möglich, den Schutzschlauch mit einem Werkzeug zunächst derart aufzuweiten, daß ein Innenring in den Schlauch eingesetzt werden kann. Bei diesem Einsetzen des Innenringes wird der Schlauch um diesen Innenring nach innen gebördelt. Mit Hilfe einer Überwurfmutter wird danach der mit dem Schutzschlauch versehene Innenring und ein Außenring gequetscht. Auch dieses Verfahren ist kompliziert durchzuführen und zeitraubend in der Anwendung.

Schließlich ist es auch möglich, das Anschlußelement in den Schutzschlauch einzuführen. Durch diese Einführung erfolgt jedoch eine Verengung des Querschnittes des Schlauches. Darüber hinaus ist es möglich, durch den Einführvorgang innerhalb des Schlauches befindliche elektrische Leitungen zu beschädigen.

Aus der EP-A-0 396 927 ist eine Vorrichtung zur Aufnahme einzelner elektrischer Leitungen bekannt, bei der ein Formstück in Gestalt eines Krümmers zur Fixierung von Schutzschläuchen vorgesehen ist. Der Krümmer weist eine einteilige Ausbildung auf und kann mit dem Schutzschlauch über Kabelbinder verbunden werden. Im Bereich seines Fixierendes ist der Krümmer mit einer umlaufenden Wulst versehen, die in einer Außenstruktur des Schutzschlauches eingreift und hierdurch eine Fixierung des Schutzschlauches relativ zum Krümmer vornimmt.

Nach der US-A-4 829 145 sind Verbindungsstücke für Schutzschläuche bekannt, die als aufklappbare Gehäuse in Form von Halbschalen Schlauchenden aufnehmen und fixieren. Zur Verbindung mit einem Gehäuse wird der Schutzschlauch über Fixierscheiben an beiden Seiten der Gehäusewandung gehalten.

Aufgabe der vorliegenden Erfindung ist es daher, ein Anschlußelement der einleitend genannten Art derart zu verbessern, daß eine Aufnahme des Schutzschlauches ohne Querschnittverengung ermöglicht wird und ein Einsetzen des Schutzschlauches in einfacher Weise erfolgen kann.

Diese Aufgabe wird erfindungsgemäß dadurch gelöst, daß die Gehäuseschalen im Bereich eines von den Gehäuseschalen ausgebildeten Einführstutzens von mindestens einem Kupplungselement miteinander verbindbar sowie im Bereich ihrer dem Einführstutzen abgewandten Enden mit aufeinander aufliegenden Kontaktflächen versehen und von einer Überwurfmutter zusammenfügbar sind und daß das Kupplungselement bei einer Überführung der Gehäuseschalen in eine Haltepositionierung zunächst den Schutzschlauch im Bereich des Einführstutzens fixiert wird und anschließend die Überwurfmutter die dem Einführstutzen abgewandten Enden der Gehäuseschalen zusammenfügt.

Durch die Aufteilung des Gehäuses in Gehäuseschalen ist es möglich, den Schutzschlauch zunächst ausreichend weit in das Gehäuse einzuschieben, ohne daß hierzu Drehbewegungen erforderlich sind. Erst nach einer ausreichenden Positionierung des Schutzschlauches erfolgt ein Zusammenfügen der gegeneinander beweglichen Gehäuseschalen. Das Zusammenführen kann beispielsweise durch ein Aufschieben der Überwurfmutter erfolgen, die zur Verbindung des Anschlußelementes mit einem Gegenelement versehen ist. Durch die der Außenkontur des Schutzschlauches angepaßte Innenkontur erfolgt nach einem Zusammenfügen der Gehäuseschalen eine sichere Fixierung des Schutzschlauches, die ein Hinausrutschen aus dem Gehäuse vermeidet.

Eine einfache Ausbildung des Kupplungselementes wird dadurch bereitgestellt, daß das Kupplungselement aus mindestens zwei zusammensteckbaren Teilen ausgebildet ist. Durch die zusammensteckbarkeit wird darüber hinaus gewährleistet, daß die Gehäuseschalen mit einem sehr geringen Aufwand miteinander verbindbar sind. Zur Ermöglichung eines Verschiebens der Gehäuseschalen relativ zueinander ist mindestens eine der Gehäuseschalen im Bereich des Einführstutzens mit einer glattflächigen Innenwandung versehen.

Eine einfache fertigungstechnische Ausbildung sowie eine hohe Belastbarkeit werden dadurch ermöglicht, daß das Kupplungselement aus Schwalbenschwanzelementen ausgebildet ist.

Zur Ermöglichung einer in die Außenprofilierung des Schutzschlauches eingreifenden Innenprofilierung der Gehäuseschalen im Bereich ihrer gesamten Innenwandung wird vorgeschlagen, daß das Kupplungselement als ein Schwenkgelenk ausgebildet ist.

Eine einfache Realisierung des Schwenkgelenkes kann dadurch erfolgen, daß das Kupplungselement aus einem Zapfen sowie einem den Zapfen mindestens bereichsweise umschließenden Haken ausgebildet ist und der Zapfen mit einer der Gehäuseschalen und der Haken mit der anderen der Gehäuseschalen verbunden ist. Die Verbindungen können durch Stege realisiert werden, die Blockierungen der Schwenkbewegung vermeiden.

Eine besonders einfache Ausführungsform des Gehäuses wird dadurch bereitgestellt, daß sich das Gehäuse im wesentlichen Bereich seiner Ausdehnung etwa linear entlang einer Längsachse erstreckt.

Zur Ermöglichung einer abgewinkelten Führung des Schutzschlauches ist es aber auch möglich, daß sich das Gehäuse mindestens entlang eines Teiles seiner Ausdehnung bogenförmig erstreckt.

In der Zeichnung sind Ausführungsbeispiele der Erfindung schematisch dargestellt. Es zeigen:
- Fig. 1: eine teilweise geschnittene Seitenansicht eines winkelförmigen Anschlußelementes,
- Fig. 2: eine teilweise geschnittene Seitenansicht eines Anschlußelementes mit einem stutzenförmigen Gehäuse,
- Fig. 3: eine teilweise geschnittene Seitenansicht eines winkelförmigen Anschlußelementes mit einem die Gehäuseschalen verbindenden Schwenkgelenk,
- Fig. 4: eine geschnittene Darstellung eines den Schutzschlauch aufnehmenden Gehäuses **und**
- Fig. 5: eine Figur 3 entsprechende Ausführungsform, bei der das Gehäuse stutzenförmig ausgebildet ist.

Das Anschlußelement besteht im wesentlichen aus einem Gehäuse (1) sowie einer Überwurfmutter (2). Das Gehäuse (1) weist einen im wesentlichen rohrförmigen Einführstutzen (3) auf und ist in Gehäuseschalen (4,5) unterteilt.

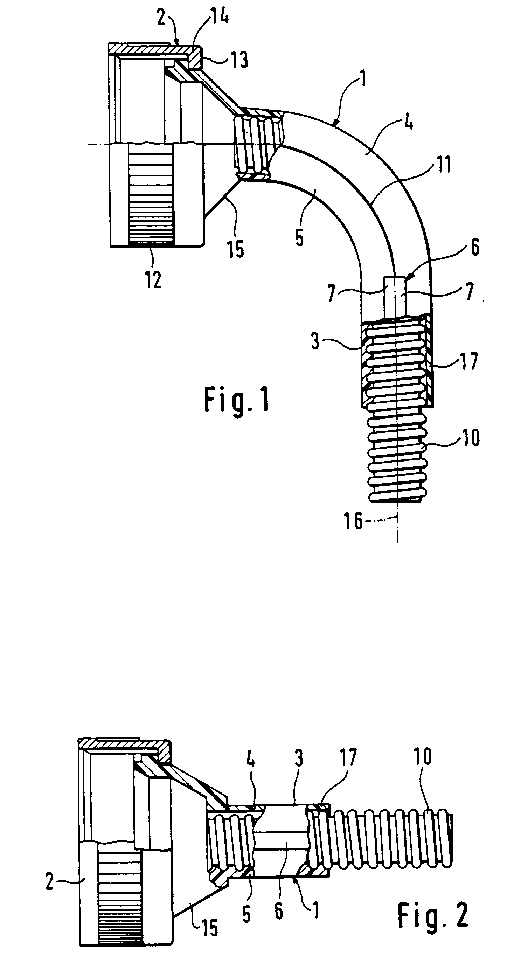

Bei der Ausführungsform gemäß Figur 1 erstreckt sich das Gehäuse (1) im wesentlichen bogenförmig ausgehend vom Einführstutzen (3) in Richtung auf die Überwurfmutter (2). Die Gehäuseschale (5) ist im gesamten Bereich ihrer Innenbegrenzung mit einer profilierten Innenwandung (17) versehen. Die Profilierung der Innenwandung (17) weist eine an die Außenstruktur eines in das Gehäuse (1) einführbaren Schutzschlauches (10) angepaßte Gestaltung auf. Die Gehäuseschale (4) ist nur im Bereich ihrer dem Einführstutzen (3) abgewandten Ausdehnung mit einer strukturierten Innenbegrenzung versehen.

Im Bereich des der Überwurfmutter (2) abgewandten Endes des Gehäuses (1) ist ein Kupplungselement (6) angeordnet, das die Gehäuseschalen (4,5) lösbar miteinander verbindet. Bei der Ausführungsform gemäß Figur 1 ist das Kupplungselement (6) aus Schwalbenschwanzelementen (7) ausgebildet, die in Richtung einer Längsachse (16) des Gehäuses (1) ineinander schiebbar sind und ein Lösen der Gehäuseschalen (4,5) voneinander quer zur Längsachse (16) verhindern. Prinzipiell können aber auch andere steckbare Kupplungselemente (16) verwendet werden, beispielsweise in Bohrungen eingreifende Zapfen. Das Kupplungselement (6) wird vorzugsweise im Bereich einer das Gehäuse (1) in die Gehäuseschalen (4,5) unterteilenden Längsteilung (11) angeordnet. Zur Ermöglichung einer Verschieblichkeit ist die Gehäuseschale (5) im Bereich des Einführstutzens (3) profiliert und die Gehäuseschale (4) glattflächig ausgebildet.

Die Überwurfmutter (2) ist mit einer ihre Handhabbarkeit verbessernden Außenriffelung (12) versehen. Zur Fixierung der Überwurfmutter (2) im Bereich des Gehäuses (1) weist die Überwurfmutter (2) einen Hinterfassungssteg (13) auf, der einen Absatz (14) im Bereich einer trichterförmigen Gehäuseerweiterung (1) hintergreift.

Die Anordnung der Längsteilungen (11) kann zum einen bezüglich der Biegung des Bogens seitlich und somit um 90 Grad versetzt zur Werkzeugaussparung (11) erfolgen. Es ist aber auch möglich, eine der Längsteilungen (11) im Bereich einer Innenbiegung anzuordnen und die zweite Längsteilung (11) im Bereich des äußeren Biegeverlaufes vorzusehen.

Durch die Kombination des Anschlußteiles und des Schutzschlauches (10) entsteht ein geschlossenes System, in dem die eingeschlossenen elektrischen Leiter zuverlässig gegen äußere Einflüsse geschützt werden. Das Anschlußelement ist insbesondere als ein Endgehäuse zur Ermöglichung einer Zugentlastung ausgebildet. Innerhalb der Schutzschläuche und des Anschlußelementes können sowohl aus einzelnen Leitungen gebildete Kabelbündel als auch komplette Kabelbäume verlegt werden.

Gemäß der Ausführungsform in Figur 2 erstreckt sich das Gehäuse (1) im wesentlichen stutzenförmig und symmetrisch entlang der Längsachse (16). Mit Ausnahme des im wesentlichen linearen Verlaufes des Gehäuses (1) entspricht diese Ausführungsform der in Figur 1 dargestellten Ausführungsform.

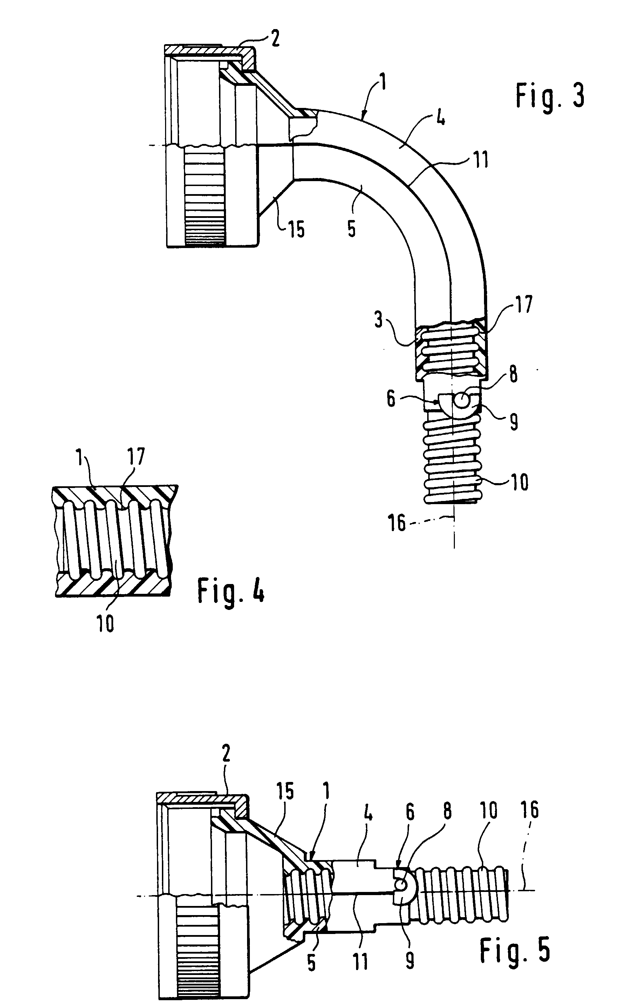

Bei den Ausführungsformen gemäß Figur 3 und 5 ist das Kupplungselement (6) aus einem mit der Gehäuseschale (4) verbundenen Zapfen (8) sowie einem mit der Gehäuseschale (5) verbundenen Haken (9) ausgebildet. Durch die Kombination des Zapfens (8) und des Hakens (9) wird ein Schwenkgelenk ausgebildet. Zur Einführung des Schutzschlauches (10) wird zunächst die Überwurfmutter (2) in den Bereich des Schutzschlauches (10) verschoben und anschließend werden die Gehäuseschalen (4,5) relativ zum Schutzschlauch (10) positioniert und gegeneinander verschwenkt. Danach wird die Überwurfmutter (2) auf die Gehäuseschalen (4,5) aufgeschoben und in den Bereich des dem Kupplungselement (6) abgewandten Endes des Gehäuses (1) verschoben. Durch das Zusammenwirken des Kupplungselementes (6) und der Überwurfmutter (2) erfolgt eine Verspannung der Gehäuseschalen (4,5) relativ zueinander und damit eine zuverlässige Fixierung des Schutzschlauches (10). Die Verbindung des Zapfens (8) sowie des Hakens (9) mit der jeweils zugeordneten Gehäuseschale (4,5) erfolgt über Stege bzw. Rippen, die im wesentlichen plan ausgebildet sind. Durch die Stege wird eine Verjüngung ausgebildet, die eine behinderungsfreie Schwenkbewegung ermöglicht.

## Patentansprüche

1. Anschlußelement, das ein Gehäuse (1) zur Halterung eines mindestens einen elektrischen Leiter umgebenden Schutzschlauches (10) aufweist und bei dem das Gehäuse (1) geteilt sowie aus zwei relativ zueinander positionierbaren Gehäuseschalen ausgebildet ist, die einen zur Aufnahme des Schutzschlauches vorgesehenen Innenraum umschließen und im Bereich ihrer Innenbegrenzungen mindestens bereichsweise mit einer an eine Außenkontur des Schutzschlauches (10) angepaßten Innenkontur versehen sind, dadurch gekennzeichnet, daß die Gehäuseschalen (4,5) im Bereich eines von den Gehäuseschalen (4,5) ausgebildeten Einführstutzens (3) von mindestens einem Kupplungselement (6) miteinander verbindbar sowie im Bereich ihrer dem Einführstutzen (3) abgewandten Enden mit aufeinander aufliegenden Kontaktflächen versehen und von einer Überwurfmutter (2) zusammenfügbar sind und daß das Kupplungselement (6) bei einer Überführung der Gehäuseschalen (4,5) in eine Haltepositionierung zunächst den Schutzschlauch (10) im Bereich des Einführstutzens (3) fixiert wird und anschließend die Überwurfmutter (2) die dem Einführstutzen (3) abgewandten Enden der Gehäuseschalen (4, 5) zusammenfügt.

2. Anschlußelement nach Anspruch 1, dadurch gekennzeichnet, daß das Kupplungselement (6) aus mindestens zwei zusammensteckbaren Teilen ausgebildet ist.

3. Anschlußelement nach Anspruch 2, dadurch gekennzeichnet, daß das Kupplungselement (6) aus Schwalbenschwanzelementen (7) ausgebildet ist.

4. Anschlußelement nach Anspruch 1, dadurch gekennzeichnet, daß das Kupplungselement (6) als ein Schwenkgelenk ausgebildet ist.

5. Anschlußelement nach Anspruch 4, dadurch gekennzeichnet, daß das Kupplungselement (6) aus einem Zapfen (8) sowie einem den Zapfen (8) mindestens bereichsweise umschließenden Haken (9) ausgebildet ist und der Zapfen (8) mit einer der Gehäuseschalen (4,5) und der Haken (9) mit der anderen der Gehäuseschalen (4,5) verbunden ist.

6. Anschlußelement nach einem der Ansprüche 1 bis 5, dadurch gekennzeichnet, daß sich das Gehäuse (1) im wesentlichen Bereich seiner Ausdehnung etwa linear entlang einer Längsachse (16) erstreckt.

7. Anschlußelement nach einem der Ansprüche 1 bis 5, dadurch gekennzeichnet, daß sich das Gehäuse (1) mindestens entlang eines Teiles seiner Ausdehnung bogenförmig erstreckt.

## Claims

1. Connecting element having a casing (1) for retaining a protective hose (10) surrounding at least one electrical conductor and wherein the casing (1) is divided and is also formed from two casing shells which are capable of being positioned relative to one another, said casing shells surrounding an inner chamber that is provided for receiving the protective hose and being provided in the region of their inner boundaries at least in some regions with an inner contour adapted to an outer contour of the protective hose (10), characterised in that the casing shells (4,5) in the region of an insertion socket (3) formed by the casing shells (4,5) are capable of being connected to one another by at least one coupling element (6) and are also provided in the region of their ends facing away from the insertion socket (3) with contact surfaces located on top of one another and are capable of being joined by a union nut (2) and in that in the event of the casing shells (4,5) being moved to a retaining position the coupling element (6) firstly secures the protective hose (10) in the region of the insertion socket (3) and then the union nut (2) joins the ends of the casing shells (4,5) facing away from the insertion socket (3).

2. Connecting element according to Claim 1, characterised in that the coupling element (6) is formed from at least two parts which are capable of being joined together.

3. Connecting element according to Claim 2, characterised in that the coupling element (6) is formed from dovetail elements (7).

4. Connecting element according to Claim 1, characterised in that the coupling element (6) takes the form of a pivot joint.

5. Connecting element according to Claim 4, characterised in that the coupling element (6) is formed from a spigot (8) and also a hook (9) surrounding the spigot (8) at least in some regions and the spigot (8) is connected to one of the casing shells (4,5) and the hook (9) is connected to the other one of the casing shells (4,5).

6. Connecting element according to one of Claims 1 to 5, characterised in that the casing (1) extends in the significant region of its extent along a longitudinal axis (16) in roughly linear manner.

7. Connecting element according to one of Claims 1 to 5, characterised in that the casing (1) extends at least along one part of its extent in the shape of an arc.

## Revendications

1. Elément de connexion présentant un boîtier (1) destiné à fixer une gaine de protection (10) entourant au moins un conducteur électrique et dans le cas duquel ledit boîtier (1) se compose de deux coquilles de boîtier pouvant être positionnées l'une par rapport à l'autre, ledites coquilles renfermant un espace interne prévu pour accueillir la gaine de protection et étant pourvues dans la zone de leurs limitations internes, du moins partiellement, d'un contour interne adapté à un contour externe de la gaine de protection (10), caractérisé en ce que les coquilles de boîtier (4, 5) peuvent être connectées l'une à l'autre dans la zone d'une tubulure d'insertion (3) constituée par lesdites coquilles de boîtier (4, 5) au moyen d'au moins un élément de couplage (6) de même qu'elles présentent dans la zone de leurs extrémités opposées à la tubulure d'insertion (3) des surfaces de contact superposées et peuvent être assemblées par un écrou-raccord (2), et en ce que l'élément de couplage (6), lors d'un raccord des coquilles de boîtier (4, 5), est fixé dans une position d'arrêt tout près de la gaine de protection (10) dans la zone de la tubulure d'insertion (3) et enfin en ce que l'écrou-raccord (2) assemble les extrémités opposées à la tubulure d'insertion (3) des coquilles de boîtier (4, 5).

2. Elément de connexion selon la revendication 1, caractérisé en ce que l'élément de couplage (6) se constitue au moins de deux parties enfichables.

3. Elément de connexion selon la revendication 2, caractérisé en ce que l'élément de couplage (6) se compose d'éléments à queue d'aronde (7).

4. Elément de connexion selon la revendication 1, caractérisé en ce que l'élément de couplage (6) est conçu comme un joint de pivotement.

5. Elément de connexion selon la revendication 4, caractérisé en ce que l'élément de couplage (6) se compose d'un pivot (8) et d'un crochet (9) entourant ledit pivot (8) du moins partiellement et en ce que le pivot (8) est relié à une des coquilles de boîtier (4, 5) et le crochet (9) est connecté à l'autre coque de boîtier (4, 5).

6. Elément de connexion selon l'une ou l'autre des revendications 1 à 5, caractérisé en ce que le boîtier (1) s'étend dans la zone principale de son extension de manière quelque peu linéaire le long d'un axe longitudinal (16).

7. Elément de connexion selon l'une ou l'autre des revendications 1 à 5, caractérisé en ce que le boîtier (1) s'étend au moins le long d'une partie de son extension de façon arquée.
